(19) Europäisches Patentamt
European Patent Office
Office européen des brevets

(11) Publication number: 0 117 946 B1

(12) # EUROPEAN PATENT SPECIFICATION

(45) Date of publication of patent specification: 22.02.89

(51) Int. Cl.[4]: H 04 B 1/10

(21) Application number: 83307195.4

(22) Date of filing: 24.11.83

(54) **Co-channel interference measurement system.**

(30) Priority: 08.02.83 JP 18102/83
20.04.83 JP 68428/83

(43) Date of publication of application:
12.09.84 Bulletin 84/37

(45) Publication of the grant of the patent:
22.02.89 Bulletin 89/08

(84) Designated Contracting States:
DE FR GB SE

(56) References cited:
EP-A-0 044 133
US-A-3 925 732
US-A-4 038 604
US-A-4 124 818
US-A-4 204 164

(73) Proprietor: NIPPON TELEGRAPH AND TELEPHONE CORPORATION
1-6 Uchisaiwaicho 1-chome Chiyoda-ku
Tokyo (JP)

(72) Inventor: Kozono, Shigeru
4-6-20, Negishi-cho
Yokosuka-shi Kanagawa (JP)
Inventor: Ishikawa, Keiichi
11-60 Sekiyamegumi-cho
Nigata-shi Nigata (JP)

(74) Representative: Skone James, Robert Edmund et al
GILL JENNINGS & EVERY 53-64 Chancery Lane
London WC2A 1HN (GB)

EP 0 117 946 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a radio communication co-channel interference detection system, and is applicable to a mobile communication system, a cordless telephone or other radio communication systems. It is applicable to a radio communication system using an angular modulation system (FM or PM).

One of the prior systems for detecting co-channel interference uses a pilot signal for detecting interference. In this system, a transmitter transmits power which is modulated by a pilot frequency outside the baseband, and the frequency of the pilot is different for each zone. When a receiver receives a pilot signal which is assigned to another zone, it is judged that there is interference. However, that system has the disadvantages that the baseband spectrum is wide, the structure of the system is complicated because the transmitter must have a pilot signal generator and the receiver must have a pilot signal receiver, and the system can detect interference only when the signal to noise ratio (D/U, where D is the desired signal, U is the undesired signal) is less than several dB.

Another prior interference detection equipment is shown in US—A—4,085,370 which monitors noise in a baseband generated by interference. This system can operate correctly only when the reception level does not vary widely and the modulation index is almost constant.

Furthermore, prior interference detection systems have the disadvantage that they merely detect the presence of interference; they cannot measure the quantity of interference. Therefore, when the communication quality becomes poor because of interference, automatic switching has been almost impossible.

US—A—4124818 describes a multiplex radio transmission system in which an incoming signal is fed to a precise square-law detector which derives from the separate information and interference components a DC component and a difference-beat AC component which are processed to yield a quantity indicative of the desired signal to interference ratio. In this case, a very precise square-law detector is needed which generates an undesired high frequency component which has to be eliminated by using a band pass filter.

US—A—3925732 illustrates a signal detector in which an incoming signal is fed to envelope detection means whose output is connected in parallel to two sampling means having their respective sampling pulses delayed in time.

It is an object of the present invention to provide a new and improved interference detection system.

According to one aspect of the present invention, there is provided a co-channel interference measurement system for radio communications using angular modulation comprising envelope detection means for detecting a signal comprising a desired first signal and an undesired second signal by envelope detection, the system being characterised in that the output from the envelope detection means corresponds to the square of the amplitude component of the input to the detector and further characterised by low frequency spectrum component detection means for detecting a spectrum similar to that of a fading spectrum, the low frequency component relating to the sum of the first signal and the second signal; high frequency spectrum component detection means for detecting a spectrum higher than a fading spectrum, the high frequency component relating to the product of the first signal and the second signal; means to provide the ratio of the square of the low frequency spectrum component to the high frequency spectrum component; and means to indicate the value of the interference ratio of the first signal to the second signal according to the ratio of the square of the low frequency spectrum component to the high frequency spectrum component.

In accordance with a second aspect of the present invention, a co-channel interference measurement system for radio communications using angular modulation is characterised by envelope detection means including an automatic gain control circuit coupled to an envelope detector for detecting a signal comprising a desired first signal and an undesired second signal by envelope detection, the output from the envelope detection means corresponding to the square of the amplitude component of the input to the envelope detection means; high frequency component detection means including a high pass filter and a detector coupled to the output of the envelope detection means; low frequency spectrum component detection means coupled to the output of the high frequency component detection means; and means to indicate the value of the interference ratio of the first signal to the second signal.

In accordance with a further aspect of the present invention, a co-channel interference measurement system for radio communications using angular modulation comprises envelope detection means for envelope detection of all of the co-channel received signals; first sampling means for sampling the output level of the envelope detection means at a time t with a predetermined period to provide a first sampled value $R_i(t)$; and second sampling means for sampling the output level of the envelope detection means at a time $t+\Delta t$ with the predetermined period to provide a second sampled value $(R_i(t+\Delta t))$; and is characterised by means for providing the low frequency component of the envelope detected output by providing the average X of the first sampled level $(R_i(t))$ and for providing the high frequency component of the envelope detected output by providing the average Y of the square of the difference between the first sampled level $(R_i(t))$ and the second sampled level $(R_i(t+\Delta t))$; and means for determining the amount of interference according to the ratio $X^2/Y$ of $X^2$ of the low frequency component and Y of the high frequency component; wherein the value $\Delta t$ is selected in the range between a minimum value at which the average of the product of high frequency spectrum components $R_i(t)$ and $R_i(t+\Delta t)$ satisfies a condition

$<\cos(\psi)\cos(\psi_\Delta)>\cong 0$ and a maximum value at which the low frequency spectrum components of $R_i(t)$ and $R_i(t+\Delta t)$ satisfy the conditions $E_1\cong E_{1\Delta}$, and $E_2\cong E_{2\Delta}$.

Embodiments of the invention will now be described, by way of example, with reference to the accompanying drawings, in which

Figure 1 shows waveforms of the output of an envelope detector;

Figure 2 shows curves of the relation between $f_m\Delta t$ and $Z^2/Y$;

Figure 3 shows curves of the error of the measured interference when the delay time $\Delta t$ is large;

Figure 4 shows the relationship between the delay time $\Delta t$ and the average of $\cos(\psi)\cos(\psi_\Delta)$;

Figure 5 shows curves of the error of the measured interference when the delay time $\Delta t$ is small;

Figure 6 shows a block diagram of an interference detection system according to the present invention,

Figure 7A is a flow chart showing the operation of the apparatus of Figure 6,

Figure 7B is a detailed block diagram of a calculator forming part of Figure 6,

Figure 8 is a block diagram of another embodiment of an interference detection system according to the present invention,

Figure 9 is a block diagram of a further embodiment of an interference detection system according to the present invention,

Figure 10 shows waveforms occurring in the apparatus of Figure 9, and

Figure 11 is a curve showing experimental results of the apparatus of Figure 9.

The theoretical principle of the present invention will first be described. It is assumed that a desired first signal $e_1$ which is angle modulated, and an undesired second signal $e_2$ which is also angle modulated, are expressed by equations (1) and (2), respectively.

Desired signal:

$$e_1=E_1(t)\sin(\omega_1 t+(\Delta\omega_1)/(P_1)\sin P_1 t) \quad (1)$$

Undesired signal:

$$e_2=E_2(t)\sin(\omega_2 t+\phi+((\Delta\omega_2)/P_2))\sin(P_2 t+\theta)) \quad (2)$$

where $E_1(t)$ and $E_2(t)$ are the amplitude of the desired signal and the amplitude of the undesired signal, respectively, and it is assumed that they are in Rayleigh distribution; $\omega_1$ and $\omega_2$ are the angular velocity of the desired wave and the undesired wave, respectively; $\Delta\omega_1$ and $\Delta\omega_2$ are the frequency shifts of the desired wave and the undesired wave by the modulation signal, respectively; $P_1$ and $P_2$ are the frequencies of the modulation of the desired signal and the undesired signal, respectively; $\phi$ is the phase difference between the desired wave and the undesired wave; and $\theta$ is the phase difference between the desired modulation signal and the undesired modulation signal.

When both the desired wave and the undesired wave are received by a receiver, the combined signal e is expressed by the equation (3).

$$\begin{aligned}e&=e_1+e_2\\&=[E_1^2(t)+E_2^2(t)+2E_1(t)E_2(t)\cos(\psi(t))]^{1/2}\\&\times\sin[\omega_1 t+((\Delta\omega_1)/(P_1))\sin P_1 t+\tan^{-1}((\lambda\sin(\psi(t))/(1+\lambda\cos(\psi(t))]\end{aligned} \quad (3)$$

where

$$\psi(t)=(\omega_2-\omega_1)t+\phi+((\Delta\omega_2)/P_2)\sin(P_2 t+\theta)-((\Delta\omega_1)/P_1)\sin P_1 t \quad (4)$$

$$\lambda=E_1/E_2 \quad (5)$$

The envelope output of the square-detector of e is expressed by the equation (6).

$$R(t)=E_1^2(t)+E_2^2(t)+2E_1(t)E_2(t)\cos(\psi(t)) \quad (6)$$

Figure 1 shows an example of the envelope output R(t), in which the curve (1) shows the envelope R(t), and the curve (2) shows the value $E_1^2(t)+E_2^2(t)$ which is the low frequency spectrum component of the envelope output R(t). It nearly equals the fading frequency, which depends upon the velocity of a vehicle and/or the wavelength of electromagnetic wave. When a vehicle moves at 40 Km/hour, and the carrier frequency is 900 MHz, the low frequency component is about 30 Hz. The $2E_1(t)E_2(t)\cos(\psi(t))$ in the equation (6) has a high frequency spectrum higher than Rayleigh fading frequency. That high frequency component is generated by the angular modulation, or the small difference of the carrier frequencies between the desired signal and the undesired signal.

According to a preferred embodiment of the present invention, the average of the low frequency component $<E_1^2(t)+E_2^2(t)>$ and the average of the high frequency spectrum component $<E_1(t)E_2(t)>$ are measured by using an analog-digital converter, and then, the D/U is calculated by using said two average values.

The analog-digital converter samples the input signal at the time (t) and the time $(t+\Delta t)$ as shown in Figure 1. The sampled values R(t) and $R(t+\Delta t)$ at the time (t) and $(t+\Delta t)$ are expressed by the equation (7).

$$R(t)=E_1^2E_2^2+2E_1E_2\cos(\psi)$$

$$R(t+\Delta t)=E_{1\Delta}^2+E_{2\Delta}^2 2E_{1\Delta}E_{2\Delta}\cos(\psi_\Delta) \qquad (7)$$

First, the average of the low frequency component value is calculated as follows. It is assumed that the average $<\cos(\psi)=0>$ when the reception signal is angular modulated and/or the sampling period is random. Therefore, the average of the low frequency spectrum component value is obtained by taking a plurality of samples, as follows.

$$<R(t)>=(1/N)\sum_{i=1}^{N} R_i(t)$$
$$=<E_1^2>+<E_2^2>=X \qquad (8)$$

where < > shows the average, and N is the sample number.

Next, the average of the high frequency spectrum component value Y is explained. The equation (9) is expressed by taking the average of the square of the difference between R(t) and R(t+Δt).

$$<(R(t)-R(t+\Delta t))^2>=(1/N)\sum_{i=1}^{N}(R_i(t)-R_i(t+\Delta t))^2$$
$$=<[(E_1^2-E_{1\Delta}^2+E_2^2-E_{2\Delta}^2)+2(E_1E_2\cos(\psi)-E_{1\Delta}E_{2\Delta}\cos(\psi_\Delta t)]^2> \qquad (9)$$

The sampling delay time Δt is selected so that the equation (10) is satisfied for $E_1$ and $E_2$ which vary according to Rayleigh fading, and the equation (11) is satisfied for cos(ψ), and $\cos(\psi_\Delta)$ which varies quickly.

$$E_1\fallingdotseq E_{1\Delta},\qquad E_2\fallingdotseq E_{2\Delta} \qquad (10)$$

$$<\cos(\psi)\cos(\psi_\Delta)>\fallingdotseq 0 \qquad (11)$$

The equation (11) means that cos(ψ) has no correlation with $\cos(\psi_\Delta)$. Then, the equation (9) is changed to the equation (12).

$$<[R(t)-R(t+\Delta t)]^2>=4<E_1^2><E_2^2>=Y \qquad (12)$$

Putting

$$(\Gamma)=(D/U)=<E_1^2>/<E_2^2> \qquad (13)$$

the equation (14) is obtained from equations (8), (12) and (13).

$$(\Gamma)^2-2K(\Gamma)+1=0 \qquad (14)$$

Then,

$$(\Gamma)=K+\sqrt{K^2-1} \qquad (15)$$

where

$$K=(2X^2/Y)-1=(<E_1^2>+<E_2^2>)/(2<E_1^2><E_2^2>) \qquad (16)$$

Since K is equal to or larger than 1, the value of the equation (15) is a real number, which is able to calculate the interference value (Γ).

Next, the delay time Δt is considered.

It should be noted that the equation (14) is derived assuming that the equations (10) and (11) are satisfied. Therefore, when those equations (10) and (11) are not satisfied, the interference value (Γ) has an error, which is analyzed below.

It is assumed that the following conditions are satisfied, and it should be noted that those conditions are naturally satisfied in mobile communication.

1) $E_1$ and $E_2$ distribute in Rayleigh distribution, and are independent from each other.
2) the amplitude $E_1$ and $E_2$ and the phase (ψ) are independent from one another.
3) $<\cos(\psi)>\fallingdotseq 0$, $\omega_1=\omega_2$, and $\phi=\phi_\Delta$ (17)

It is quite clear from the equation (8) that X=<R(t)> does not depend upon Δt.

The value Y depends upon Δt, and the value Y′ with the influence of Δt is expressed by the equation (18).

$$Y'=\langle(R(t)-R(t+\Delta t))^2\rangle$$

$$=\langle Z^2\rangle+4\langle E_1^2\rangle\langle E_2^2\rangle(1-2\langle\cos(\psi)\cos(\psi_\Delta)\rangle) \quad (18)$$

where

$$Z=E_1^2-E_{1\Delta}^2+E_2^2-E_{2\Delta}^2$$

In comparing Y, expressed by the equation (12) with no influence of $\Delta t$, with Y', expressed by the equation (18) with the influence of $\Delta t$, it should be noted that

Y' has the additional terms $\langle Z^2\rangle$, and $-8\langle E_1^2\rangle\langle E_2^2\rangle\langle\cos(\psi)\cos(\psi_\Delta)\rangle$.

a) When $\Delta t$ is large;

In this case, $\langle\cos(\psi)\cos(\psi_\Delta)\rangle\fallingdotseq 0$ is satisfied, and the equation (18) becomes;

$$Y'=\langle Z^2\rangle+4\langle E_1^2\rangle\langle E_2^2\rangle \quad (19)$$

where $\langle Z^2\rangle$ is expressed by the equation (20).

$$\langle Z^2\rangle=8b_2^2[\Gamma^2(1-\rho_1^2)+(1-\rho_2^2)] \quad (20)$$

where $b_2^2=\langle E_2^4\rangle/8$, and $(\rho)$ is an auto correlation as follows.

$$(\rho)=J_0(2\,¶\, f_m\Delta t) \quad (21)$$

where $f_m$ is the fading frequency ($f_m$=v(velocity)/$\lambda$(wavelength), and $J_0$ is the Bessel function of zero'th order. The equation (21) shows that Y is influenced by the product of $\Delta t$ and $f_m$.

Figure 2 shows the curves of $\langle Z^2\rangle/Y$. The influence of $f_m\Delta t$ depends upon the value $(\Gamma)$, and the larger the value $(\Gamma)$ is, the larger the influence is.

Figure 3 shows the curves of the influence of $f_m\Delta t$ on $(\Gamma)$, in which the horizontal axis shows the true (set) value of $D/U=(\Gamma_t)$, and the vertical axis shows the measured value $D/U=(\Gamma_M)$. The solid lines in Figure 3 show theoretically calculated values and the dots show the measured values. It should be noted that the ideal line in Figure 3 is the 45° line which has no error. The value $(\Gamma_M)$ becomes theoretically and experimentally smaller than the value $(\Gamma_t)$ when $f_m\Delta t$ is large, and the error is large when $(\Gamma_t)$ is large. It should be appreciated in Figure 3 that the value $f_m\Delta t$ must be less than 0.03 because the error becomes less than 1 dB when $(\Gamma_t)$ is smaller than 15 dB. In Figure 3, $\rho_1=\rho_2$ is assumed.

b) When $\Delta t$ is small;

In this case, the equation (10) is satisfied, and Y' becomes

$$Y'=4\langle E_2^2\rangle\langle E_2^2\rangle(1-2\langle\cos(\psi)\cos(\psi_\Delta)\rangle) \quad (22)$$

where the value $\langle\cos(\psi)\cos(\psi_\Delta)\rangle$ is expressed by the equation (23).

$$\begin{aligned}\langle\cos(\psi)\cos(\psi_\Delta)\rangle=&\tfrac{1}{2}J_0(Z_1)J_0(Z_2)\\&+\Sigma[\cos(2n\theta_2-2m\theta_1)J_{2n}(Z_2)J_{2m}(Z_1)]\\&-\Sigma[\cos((2n+1)\theta_2-(2m+1)\theta_1)J_{2n+1}(Z_2)J_{2m+1}(Z_1)]\end{aligned} \quad (23)$$

where J shows the Bessel function,

$$\theta_1=\tan^{-1}(\sin P_1\Delta t/(\cos P_1\Delta t-1))$$
$$\theta_2=\tan^{-1}((\sin(\theta)-\sin(P_2t+\theta))/(\cos\theta-\cos(P_2\Delta t+\theta)))$$
$$Z_1=\sqrt{2(1-\cos P_1\Delta t)}\ \Delta\omega_1/P_1$$
$$Z_2=\sqrt{2(1-\cos P_2t)}\ \Delta\omega_2/P_2$$

The second term and the third term become effective only when $nP_2=mP_1$, and $((2n+1)P_2=(2m+1)P_1$, respectively, are satisfied by proper integers m and n ($m=n\neq 0$).

Figure 4 shows the relation between $2\langle\cos(\psi)\cos(\psi_\Delta)\rangle$ (vertical axis), and the delay time $\Delta t$ (horizontal axis), in which $\Delta\omega_1$=1000 Hz, $\Delta\omega_2$=1010 Hz, the modulation signal a sine wave signal, $P_1$=200 Hz, and $P_2$ is in the range between 195 Hz and 205 Hz. It should be noted in Figure 4 that the value $2\langle\cos(\psi)\cos(\psi_\Delta)\rangle$ decreases with the increase of $\Delta t$, but it does not depend upon modulation frequency $P_2$. The value becomes nearly zero when $\Delta t$=0.4 msec, after that it decreases with vibrating.

It should be noted that $2\langle\cos(\psi)\cos(\psi_\Delta)\rangle$ is substantially zero when $\Delta t$ is larger than 0.4 msec, and therefore it is preferable that $\Delta t$ is larger than 0.4 msec.

The value $2\langle\cos(\psi)\cos(\psi_\Delta)\rangle$ shows the decrease from the value Y when $\Delta t$ is small, as shown in equation (18).

Figure 5 shows the influence of $\Delta t$ on the value $(\Gamma_M)$ under the conditions shown in Figure 4. When the value $\Delta t$ is small, the value $(\Gamma_M)$ becomes large, and the influence is large when $(\Gamma_t)$ is large. The reason why $(\Gamma_M)$ becomes larger, is that Y becomes small when $\Delta t$ is small.

Figure 6 shows a block diagram of the present invention, in which the upper portion shows an experimental unit for testing the present apparatus, and the lower portion 90 enclosed by a dotted line shows the present interference detector. The experimental unit comprises an oscillator 3 for generating a desired signal (D), which is angle-modulated by a modulation signal on a terminal 3a. Another oscillator 6 generates an undesired signal (U), which is angle-modulated by a modulation signal on a terminal 6a. Fading simulators 4 and 7 apply artificial fading to the desired signal (D) and the undesired signal (U), respectively. The unit further comprises variable attenuators 5 and 8, a combiner 9 for combining the desired signal (D) and the undesired signal (U), and a receiver 10 which provides an intermediate frequency output (IF OUT). That IF OUT signal is applied to the present interference detector 90, which includes an amplifier 11, an envelope detector 12, a pair of analog/digital converters 13 and 14, a processor 15 and a delay circuit 22. Preferably, the amplifier 11 is a logarithmic amplifier, and a corresponding logarithmic expander 15a is inserted at the input portion of the processor 15 so that a signal processed by the envelope detector 12 and converter 13 and/or 14 has a small dynamic range.

Figure 7A shows a flow-chart of the processor 15 when the processor 15 is implemented by a programmed computer, and Figure 7B shows a block diagram of the processor 15 when the processor is implemented by hardware. Firstly, the sampling number N is set in the counter 15b (Figure 7B, box 100 in Figure 7A). The number N is usually 500—1000 in case of Rayleigh fading. The delay time $\Delta t$ is also set and that value $\Delta t$ is applied to the delay circuit 22 which delays the sampling trigger signal by $\Delta t$. Then, the first A/D converter 13 provides the signal value $R_i(t)$ sampled at the time (t), and the second converter 14 provides the signal value $R_i(t+\Delta t)$ sampled at the time $(t+\Delta t)$. The accumulators (15c, 15d in Figure 7B, box 108 in Figure 7A) provide the sum of the sampled values, and the square of the difference of the two samples ($R_i(t)$ and $R_i(t+\Delta t)$), respectively. It should be noted that the accumulators 15c and 15d, or the box 108 in Figure 7A are reset to zero in each initial condition (i=0).

When the above accumulation is repeated by N times, the division is carried out by the divider 15e in Figure 7B, or the box 112 in Figure 7A, which divides the input value by N to provide the value X and Y in the previous equations (8) and (12). Then, the calculator 15f in Figure 7B or the box 114 in Figure 7A provides the value k $(=(2X^2/Y-1))$ according to the equation (16).

The calculator 15g in Figure 7B or the box 116 in Figure 7A calculates the value $(k^2-1)$ in order to assure that said value $(k^2-1)$ is positive. If that value $(k^2-1)$ is negative, the present system is reinitialized, and the above operation is carried out again. When said value $(k^2-1)$ is zero or positive, the calculator 15h in Figure 7B or the box 120 in Figure 7A calculates the value $(k+\sqrt{K^2-1})$ which is the resultant interference.

Figure 8 shows another embodiment of the present invention, in which the calculation is accomplished by hardware without using a programmed means. This apparatus comprises an antenna 20, a receiver 10, an envelope detector 12, a smoother circuit 23, a square circuit 24, a divider circuit 25, a level meter 26, a delay circuit 27, a differential amplifier 28, a square circuit 29 and a smoother circuit 30.

In Figure 8, both the desired signal (D) and the undesired signal (U) enter into the receiver 10 through the antenna 20. At the output of the receiver 10, the intermediate frequency output ($IF_{out}$) is applied to the envelope detector 12. The output of the detector 12 is applied to the smoother 23, which then flattens the high frequency component of the envelope detected signal. Therefore, that smoother 23 provides the low frequency component X expressed by the equation (8). Then, the square circuit 24 provides the square $X^2$, as follows.

$$\begin{aligned} X^2 &= (<E_1^2>+<E_2^2>)^2 \\ &= <E_1^2>^2+2<E_2^2><E_2^2>+<E_2^2>^2 \end{aligned} \qquad (24)$$

The output of the detector 12 is also applied to the delay circuit 27, which delays the signal by the time $\Delta t$. The delayed signal and the non-delayed signal are applied to the differential amplifier 28, the output of which is applied to the square circuit 29. The output of the square circuit 29 is smoothed by the smoother 30. Accordingly, the output of the smoother 30 is the high frequency component Y of the equation (12). The output of the divider 25 is the ratio of the low frequency component $X^2$ and the high frequency component Y as shown in the equation (25).

$$Z = \frac{<E_1^2>^2+2<E_1^2><E_2^2>+<E_2^2>^2}{4<E_1^2><E_2^2>} Z_3$$

$$= \tfrac{1}{4}(\Gamma+2+1/\Gamma) \qquad (25)$$

Therefore, the level meter 26 indicates the value Z, which then shows the ratio $D/U=<E_1^2>/<E_2^2>$ by plotting the scale of the meter 26 properly.

Figure 9 shows a further embodiment of the present invention, which comprises an antenna 20, a receiver 10, an AGC (automatic gain control) circuit 43, an envelope detector 44, an amplifier 45, a high-pass filter 46, a detector 47, a low-pass filter 48, a smoother circuit 49, another smoother circuit 50, and a level meter 51. Figure 10 shows waveforms occurring in the apparatus of Figure 9, namely the waveform 62 of the output of the detector 44, the waveform 63 of the high-pass filter 46, the waveform 64 of the detector 47, and the waveform 65 of the smoother circuit 50.

In Figure 9, both the desired signal D and the undesired signal U are applied to the receiver 10 through the antenna 20. The intermediate frequency output IF OUT of the receiver 10 is applied to the envelope detector 44 through the AGC amplifier 43. The time constant of the loop circuits of 43, 44 and 49 is very large so that that loop circuit removes only the variation of the median value level which is usually 0.1—1.0 Hz. The output of the envelope detector 44 is shown in the equation (6) and the waveform 62 in Figure 10. The output of the detector 44 is applied to the high-pass filter 46 through the amplifier 45. The high-pass filter 46 removes the low frequency component ($E_1^2+E_2^2$), and then the output of the high-pass filter 46 is the waveform 63 of Figure 10. The waveform 63 is processed by the envelope detector 47 and the low-pass filter 48, then the product of the desired signal $E_1$ and the undesired signal $E_2$ is obtained as shown in the following formula.

$$Y''=2E_1E_2$$

where the value Y'' is the instantaneous value and varies by fading. Therefore, the waveform is processed as shown by the waveform 65 in Figure 10 by the smoother 50, and the square root of the square average of Y'' is indicated by the level meter 51. The indicated value W by the meter 51 is;

$$W=2(<E_1^2><E_2^2>)^{12} \qquad (26)$$

On the other hand, the value $X(=<E_1^2>+<E_2^2>)$ is constant because of the presence of the AGC circuit 43, i.e.

$$X=<E_1^2>+<E_2^2>=C \text{ (constant)} \qquad (27)$$

The following equation is derived from the equations (26) and (27).

$$W=2C\sqrt{(\Gamma)}/((\Gamma)+1), \quad \text{where} \quad (\Gamma)=<E_1^2>/<E_2^2> \qquad (28)$$

Therefore, the D/U ratio ($=\Gamma$) is measured by properly plotting $\Gamma$ on the meter 51.

Figure 11 shows the experimental curve of the apparatus of Figure 9. In Figure 11, the horizontal axis shows the set value D/U ratio and the vertical axis shows the measured value W. The solid line shows the theoretical curve, and the dots show the measured value. The measured value coincides well with the theoretical solid curve.

It may be advantageous to provide a pilot signal outside of the signal band for easy detection of the beat between the desired signal and the undesired signal. That pilot signal is preferably modulated by angular modulation. Alternatively, the carrier frequency of the first transmitter may be a little different from that of the second transmitter so that the beat frequency between the two carriers is easily detected.

**Claims**

1. A co-channel interference mesurement system for radio communications using angular modulation, the system comprising envelope detection means (12) for detecting a signal comprising a desired first signal (D) and an undesired second signal (U) by envelope detection, the system being characterised in that the output from the envelope detection means (12) corresponds to the square of the amplitude component of the input to the detector and further characterised by low frequency spectrum component detection means (23) for detecting a spectrum similar to that of a fading spectrum, the low frequency component (X) relating to the sum of the first signal and the second signal; high frequency spectrum component detection means (27, 28, 29, 30) for detecting a spectrum higher than a fading spectrum, the high frequency component (Y) relating to the product of the first signal and the second signal; means (25) to provide the ratio of the square ($X^2$) of the low frequency spectrum component to the high frequency spectrum component (Y); and means (26) to indicate the value ($\Gamma$) of the interference ratio (D/U) of the first signal to the second signal according to the ratio of the square of the low frequency spectrum component to the high frequency spectrum component.

2. A co-channel interference measurement system according to Claim 1, characterised in that the low frequency component detection means is provided with a smoother circuit (23) which removes the high frequency component; and in that the high frequency component detection means is provided with a delay circuit (27) to delay the envelope detection output, a differential circuit (28) for providing the difference between the output of the delay circuit and the output of the envelope detection means (12), and a square circuit (29) coupled to the output of the differential circuit.

3. A co-channel interference measurement system for radio communications using angular modulation, characterised by envelope detection means (12) including an automatic gain control circuit (43) coupled to an envelope detector (44) for detecting, a signal comprising a desired first signal (D) and an undesired second signal (U) by envelope detection, the output from the envelope detection means (44) corresponding to the square of the amplitude component of the input to the envelope detection means; high frequency component detection means including a high pass filter (46) and a detector (47) coupled to the output of the envelope detection means; low frequency spectrum component detection means (48, 50) coupled to the output of the high frequency component detection means; and means (51) to indicate the value of the interference ratio of the first signal to the second signal.

4. A co-channel interference measurement system for radio communications using angular modulation, the system comprising envelope detection means (12) for envelope detection of all of the co-channel received signals; first sampling means (13) for sampling the output level of the envelope detection means at a time t with a predetermined period to provide a first sampled value $R_i(t)$; and second sampling means (14) for sampling the output level of the envelope detection means at a time $t+\Delta t$ with the predetermined period to provide a second sampled value $(R_i(t+\Delta t))$; characterised by means (15c, 15d) for providing the low frequency component of the envelope detected output by providing the average (X) of the first sampled level $(R_i(t))$ and for providing the high frequency component of the envelope detected output by providing the average (Y) of the square of the difference between the first sampled level $(R_i(t))$ and the second sampled level $(R_i(t+\Delta t))$; and means (15e—15h) for determining the amount of interference according to the ratio $(X^2/Y)$ of $(X^2)$ of the low frequency component and (Y) of the high frequency component; wherein the value $\Delta t$ is selected in the range between a minimum value at which the average of the product of high frqeuency spectrum components $R_i(t)$ and $R_i(t+\Delta t)$ satisfies a condition $<\cos(\psi)\cos(\psi_\Delta)>\cong 0$ and a maximum value at which the low frequency spectrum components of $R_i(t)$ and $R_i(t+\Delta t)$ satisfy the conditions $E_1 \cong E_{1\Delta}$, and $E_2 \cong E_{2\Delta}$.

## Patentansprüche

1. System zur Messung der Interferenz von benachbarten Kanälen für Funk-Kommunikationen mit Winkelmodulation, wobei das System ein Hüllkurvendemodulationsmittel (12) zur Hüllkurvenmodulation eines Signals aufweist, das ein erwünschtes erstes Signal (D) und ein unerwünschtes zweites Signal (U) aufweist, dadurch gekennzeichnet, daß das Ausgangssignal des Hüllkurvendemodulationsmittels (12) dem Quadrat der Amplitudenkomponente des Eingangssignals des Demodulators entspricht; und ferner gekennzeichnet durch ein Niederfrequenzspektrumkomponenten-Demodulationsmittel (23) zum Demodulieren eines einem Schwundspektrum ähnlichen Spektrums, wobei die Niederfrequenzkomponente (X) zur Summe des ersten Signals und des zweiten Signals in Beziehung steht; ein Hochfrequenzspektrumkomponenten-Demodultionsmittel (27, 28, 29, 30) zum Demodulieren eines höheren Spektrums als ein Schwundspektrum, wobei die Hochfrequenzkomponente (Y) zu dem Produkt des ersten Signals und des zweiten Signals in Beziehung steht; ein Mittel (25) zur Bildung des Verhältnisses des Quadrats $(X^2)$ der Niederfrequenzspektrumkomponente zur Hochfrequenzspektrumkomponente (Y); und ein Mittel (26) zum Anzeigen des Wertes (Γ) des Interferenzverhältnisses (D/U) des ersten Signals zum zweiten Signal entsprechend dem Verhältnis des Quadrats der Niederfrequenzspektrumkomponente zur Hochfrequenzspektrumkomponente.

2. System nach Anspruch 1, dadurch gekennzeichnet, daß das Niederfrequenzkomponentendemodulationsmittel mit einer Glättungsschaltung (23) versehen ist, die die Hochfrequenzkomponente entfernt; und daß das Hochfrequenzkomponentendemodulationsmittel mit einer Verzögerungsschaltung (27) zum Verzögern des Hüllkurvendemodultionsausgangssignals, mit einer Differentialschaltung (28) zur Bildung der Differenz zwischen dem Ausgangssignal der Verzögerungsschaltung und dem Ausgangssignal des Hüllkurvendemodulationsmittels (12) und mit einer Quadrierschaltung (29), die am Ausgangs der Differentialschaltung angeschlossen ist, versehen ist.

3. System zur Messung der Interferenz von benachbarten Kanälen für Funk-Kommunkationen mit Winkelmodulation, gekennzeichnet, durch ein Hüllkurvendemodulationsmittel (12) mit einer Verstärkungsregelschaltung (43) die an einen Hüllkurvendemodulator (44) zur Hüllkurvendemodulation eines ein erwünschtes erstes Signal (D) und ein unerwünschtes zweites Signal (U) aufweisenden Signals angeschlossen ist, wobei das Ausgangssignal des Hüllkurvendemodulationsmittels (44) dem Quadrat der Amplitudenkomponente des Eingangssignals des Hüllkurvendemodulationsmittels entspricht; ein Hochfrequenzkomponentendemodulationsmittel mit einem Hochpaßfilter (46) und einem Demodulator (47), der am Ausgang des Hüllkurvendemodulationsmittels angeschlossen ist; ein Niederfrequenzspektrumkomponenten - Demodulationsmittel (48, 50), das am Ausgang des Hochfrequenzkomponenten-Demodulationsmittels angeschlossen ist; und ein Mittel (51) zum Anzeigen des Wertes des Interferenzverhältnisses des ersten Signals zum zweiten Signal.

4. System zur Messung der Interferenz von benachbarten Kanälen für Funk-Kommunikationen mit Winkelmodulation, wobei das System ein Hüllkurvendemodulationsmittel (12) zur Hüllkurvendemodulation aller in den benachbarten Kanälen empfangenen Signale; ein erstes Abtastmittel (13) zum Abtasten des Ausgangspegels des Hüllkurvendemodulationsmittels in einem Zeitpunkt t mit einer vorbestimmten Periode zur Bildung eines ersten Abtastwertes $R_i(t)$; und ein zweites Abtastmittel (14) zum Abtasten des Ausgangspegels des Hüllkurvendemodulationsmittels in einem Zeitpunkt $t+\Delta t$ mit der vorbestimmten Periode zur Bildung eines zweiten Abtastwertes $(R_i(t+\Delta t))$ aufweist; gekennzeichnet durch Mittel (15c, 15d) zur Bildung der Niederfrequenzkomponente des hüllkurvendemodulierten Ausgangssignals durch Bildung des Mittelwertes (X) des ersten Abtastpegels $(R_i(t+\Delta t))$ und zur Bildung der Hochfrequenzkomponente des hüllkurvendemodulierten Ausgangssignals durch Bildung des Mittelwertes (Y) des Quadrats der Differenz zwischen dem ersten Abtastpegel $(R_i(t))$ und dem zweiten Abtastpegel

$(R_i(t+\Delta t))$; und Mittel (15e—15h) zur Bestimmung des Betrags der Differenz entsprechend dem Verhältnis $(X^2/Y)$ des Quadrats $(X^2)$ der Niederfrequenzkomponente zur Hochfrequenzkomponente (Y); wobei der Wert $\Delta t$ so gewählt ist, daß er im Bereich zwischen einem Minimalwert, bei dem der Mittelwert des Produkts der Hochfrequenzspektrumkomponenten $R_i(t)$ und $R_i(t+\Delta t)$ die Bedingung $<\cos(\psi)\cos(\psi_\Delta)> \cong 0$ erfüllt, und einem Maximalwert liegt, bei dem die Niederfrequenzspektrumkomponenten von $R_i(t)$ und $R_i(t+\Delta t)$ die Bedingungen $E_1 \cong E_{1\Delta}$ und $E_2 \cong E_{2\Delta}$ erfüllen.

**Revendications**

1. Un système de mesure d'interférence de canaux contigus pour communications radio utilisant une modulation angulaire, le système comprenant un dispositif de détection d'enveloppe (12) destiné à détecter un signal comprenant un premier signal souhaité (D) et un second signal non souhaité (U) par la détection d'enveloppe, le système étant caractérisé en ce que la sortie du dispositif de détection d'enveloppe (12) correspond au carré de la composante d'amplitude de l'entrée dans le détecteur et caractérisé en outre par un dispositif de détection de la composante de spectre basse fréquence (23) pour détecter un spectre semblable à celui d'un spectre d'évanouissement, la composante basse fréquence se rapportant à la somme du premier signal et du second signal; un dispositif de dètection de composante de spectre haute fréquence (27, 28, 29, 30) pour détecter un spectre plus haut que le spectre d'évanouissement, la composante haute fréquence (Y) se rapportant au produit du premier signal par le second signal; un dispositif (25) pour donner le rapport du carré $(X^2)$ de la composante de spectre basse fréquence avec la composante de spectre haute fréquence (Y); et un dispositif (26) destiné à indiquer la valeur $(\Gamma)$ du rapport d'interférence (D/U) du premier signal avec le second signal selon le rapport du carré de la composante de spectre basse fréquence avec la composante de spectre haute fréquence.

2. Un système de mesure d'interférence de canaux contigus selon la revendication 1, caractérisé en ce que le dispositif de détection de composante basse fréquence est muni d'un circuit de lissage (23) qui élimine la composante haute fréquence; et en ce que le dispositif de détection de composante haute fréquence est muni d'un circuit de retard (27) pour retarder la sortie de détection d'enveloppe, un circuit différentiel (28) pour donner la différence entre la sortie du circuit de retard et la sortie du dispositif de détection d'enveloppe (12), et un circuit quadratique (29) relié à la sortie du circuit différentiel.

3. Un système de mesure d'interférence de canaux contigus pour communications radio utilisant une modulation angulaire, caractérisé en ce que le dispositif de détection d'enveloppe (12) comprenant un circuit de contrôle de gain automatique (43) relié à un détecteur d'enveloppe (44) pour détecter un signal comprenant un premier signal souhaité (D) et un second signal non souhaité (U) par détection d'enveloppe, la sortie du dispositif de détection d'enveloppe correspondant au carré de la composante d'amplitude de l'entrée dans le dispositif de détection d'enveloppe; un dispositif de détection de la composante haute fréquence comprenant un filtre passe-haut (46) et un détecteur (47) relié à la sortie du dispositif de détection d'enveloppe; un dispositif de détction de la composante spectre basse fréquence (48, 50) relié à la sortie d'un dispositif de détection de la composante haute fréquence; et un dispositif (51) destiné à indiquer la valeur du rapport d'interférence du premier signal avec le second signal.

4. Un système de mesure d'interférence de canaux contigus pour communications radio utilisant une modulation angulaire, le système comprenant un dispositif de détection d'enveloppe (12) pour la détection d'enveloppe de tous les signaux de canaux contigus reçus; un premier dispositif d'échantillonnage (13) pour l'échantillonnage du niveau de sortie du dispositif de détection d'enveloppe à un instant t avec une période prédéterminée pour donner une première valeur échantillonnée $R_1(t)$; et un second dispositif d'échantillonnage (14) pour l'échantillonnage du niveau de sortie du dispositif de détection d'enveloppe à un moment $t+\Delta t$ avec la période prédéterminée pour donner une seconde valeur échantillonnée $(R_1(t+\Delta t))$; caractérisé par un dispositif (15c, 15d) destiné à fournir la composante basse fréquence de la sortie de l'enveloppe détectée en donnant la moyenne (X) du premier niveau échantillonné $(R_i(t))$ et pour donner la composante haute fréquence de la sortie de l'enveloppe détectée en donnant la moyenne (Y) du carré de la différence entre le premier niveau échantillonné $(R_i(t))$ et le second niveau échantillonné $(R_i(t+\Delta t))$; et un dispositif (15e, 15h) destiné à dèterminer la quantité d'interférence selon le rapport $(X^2/Y)$ de $(X^2)$ de la composante basse fréquence et (Y) de la composante haute fréquence; où la valeur $\Delta t$ est sélectionnée entre une valeur minimum à laquelle la moyenne du produit des composantes de spectre haute fréquence $R_i(t)$ et $R_i(\Delta t)$ satisfait une condition $<\cos(\psi)\cos(\psi\Delta)>=0$, et une valeur maximum à laquelle les composantes du spectre basse fréquence de $R_i(t)$ et $R_i(t+\Delta t)$ satisfont les conditions $E_1 \cong E_{1\Delta}$, et $E_2 \cong E_{2\Delta}$.

*Fig. 1*

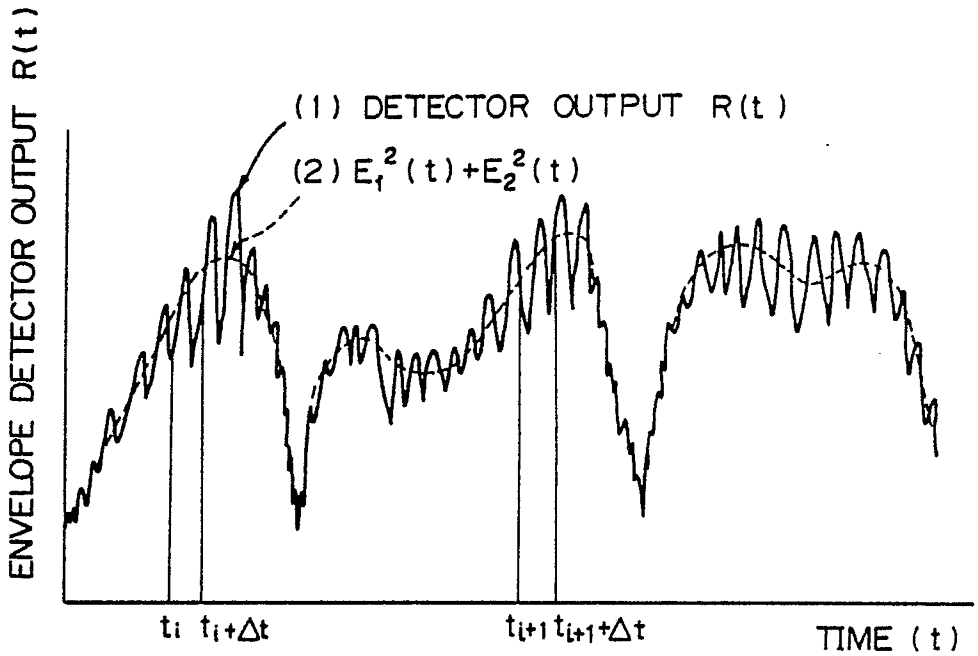

ENVELOPE DETECTOR OUTPUT R(t)
(1) DETECTOR OUTPUT R(t)
(2) $E_1^2(t)+E_2^2(t)$
$t_i$
$t_i+\Delta t$
$t_{i+1}$
$t_{i+1}+\Delta t$
TIME (t)

Fig. 2

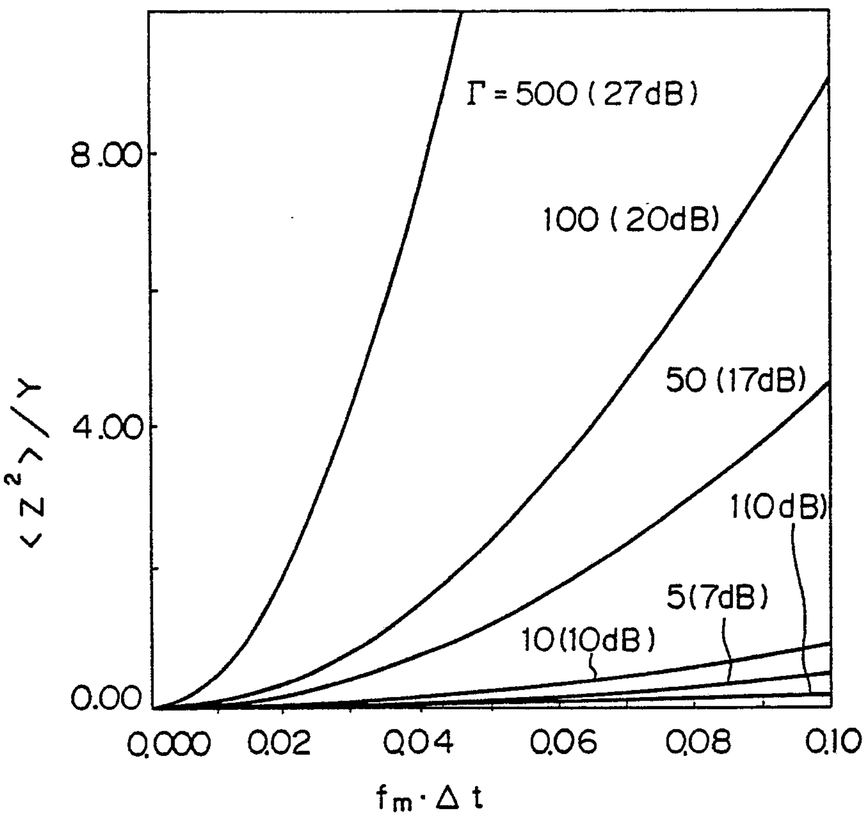
Γ = 500 ( 27dB )
100 ( 20dB )
50 (17dB)
1(0dB)
5(7dB)
10(10dB)
8.00
4.00
0.00
0.000
0.02
0.04
0.06
0.08
0.10
< Z² > / Y
fm · Δ t

Fig. 3

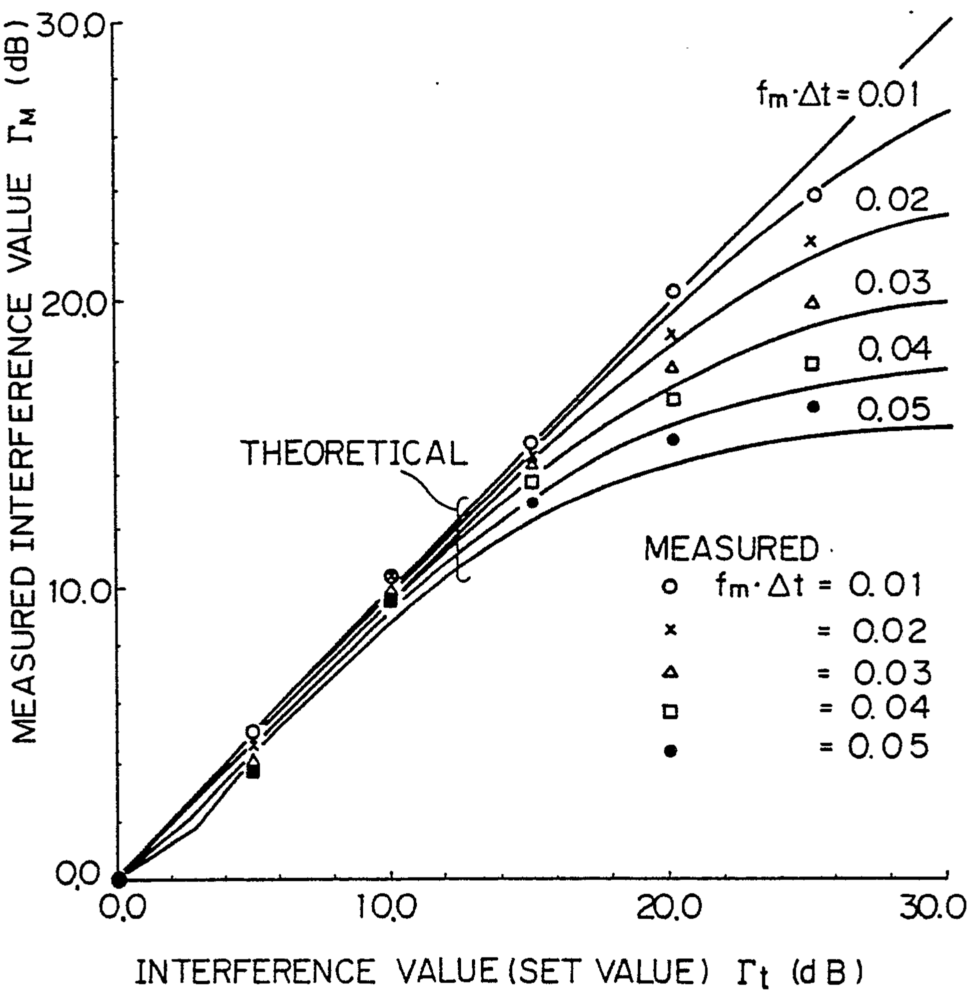
MEASURED INTERFERENCE VALUE $\Gamma_M$ (dB)
30.0
20.0
10.0
0.0
INTERFERENCE VALUE (SET VALUE) $\Gamma_t$ (dB)
0.0
10.0
20.0
30.0
$f_m \cdot \Delta t$ = 0.01
0.02
0.03
0.04
0.05
THEORETICAL
MEASURED
○ $f_m \cdot \Delta t$ = 0.01
× = 0.02
△ = 0.03
□ = 0.04
● = 0.05

Fig. 4

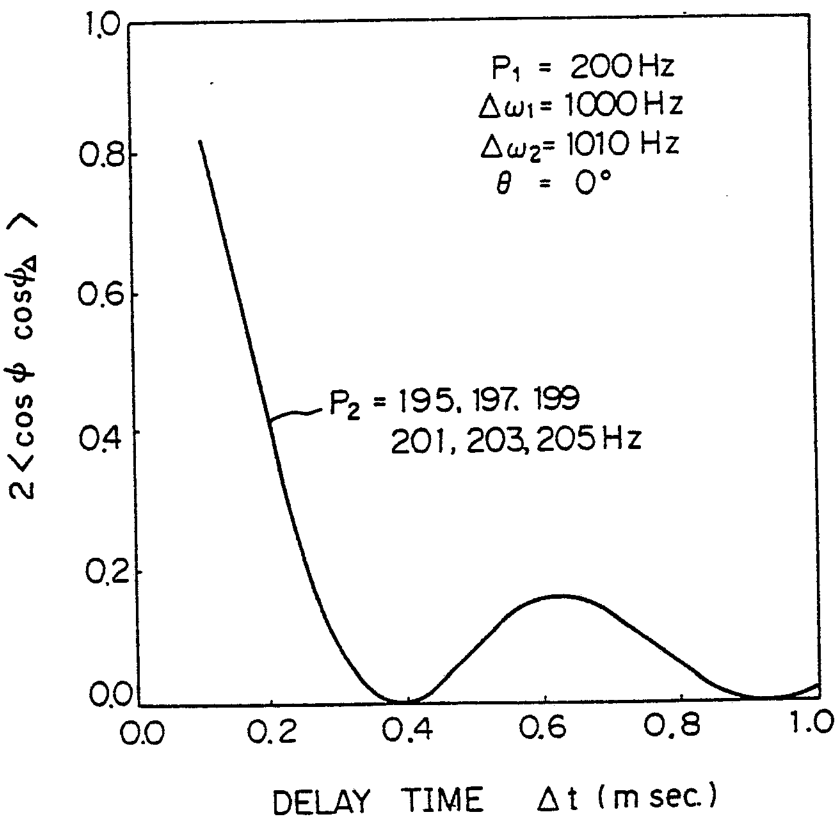
1.0
0.8
0.6
0.4
0.2
0.0
2 < cos φ cos$\phi_\Delta$ >
$P_1$ = 200 Hz
$\Delta\omega_1$ = 1000 Hz
$\Delta\omega_2$ = 1010 Hz
θ = 0°
$P_2$ = 195, 197, 199
201, 203, 205 Hz
0.0
0.2
0.4
0.6
0.8
1.0
DELAY TIME Δt (m sec.)

*Fig. 5*

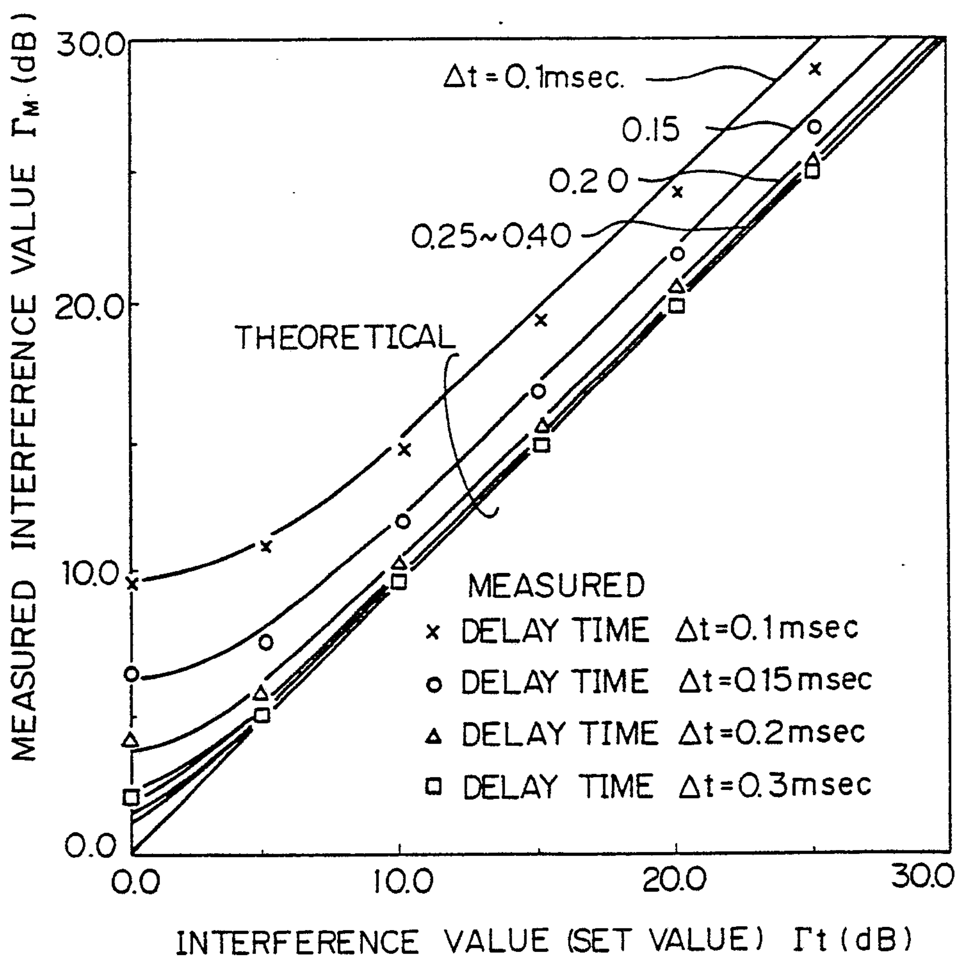

MEASURED INTERFERENCE VALUE ΓM (dB)
30.0
20.0
10.0
0.0
Δt = 0.1msec.
0.15
0.20
0.25~0.40
THEORETICAL
MEASURED
× DELAY TIME Δt=0.1msec
○ DELAY TIME Δt=0.15msec
△ DELAY TIME Δt=0.2msec
□ DELAY TIME Δt=0.3msec
0.0
10.0
20.0
30.0
INTERFERENCE VALUE (SET VALUE) Γt (dB)

Fig. 6

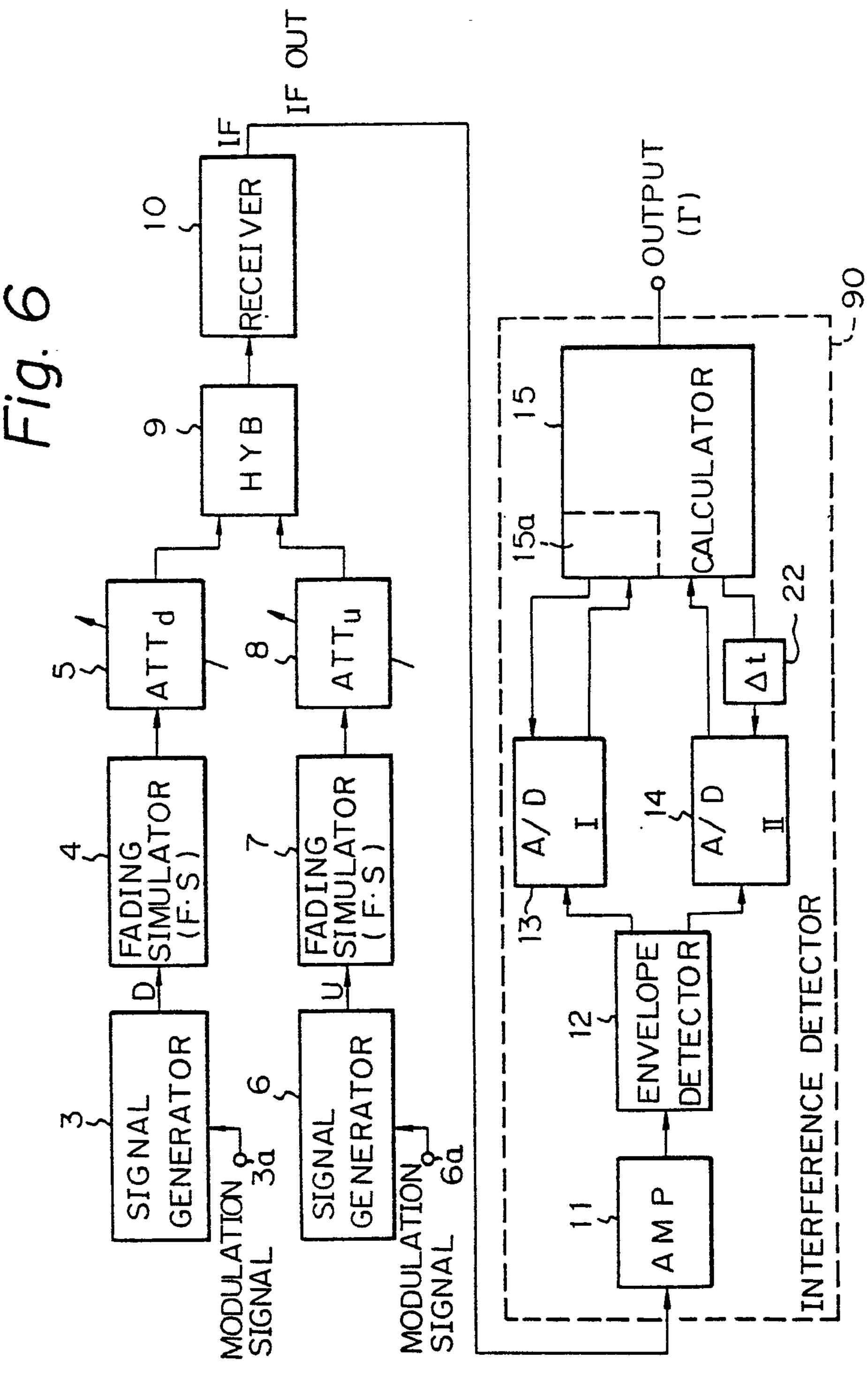
SIGNAL GENERATOR
3
3a
MODULATION SIGNAL
D
FADING SIMULATOR (F·S)
4
ATT d
5
SIGNAL GENERATOR
6
6a
MODULATION SIGNAL
U
FADING SIMULATOR (F·S)
7
ATT u
8
HYB
9
RECEIVER
10
IF
IF OUT
AMP
11
ENVELOPE DETECTOR
12
A/D I
13
A/D II
14
Δt
22
CALCULATOR
15
15a
OUTPUT (Γ)
INTERFERENCE DETECTOR
90

Fig. 7(A)

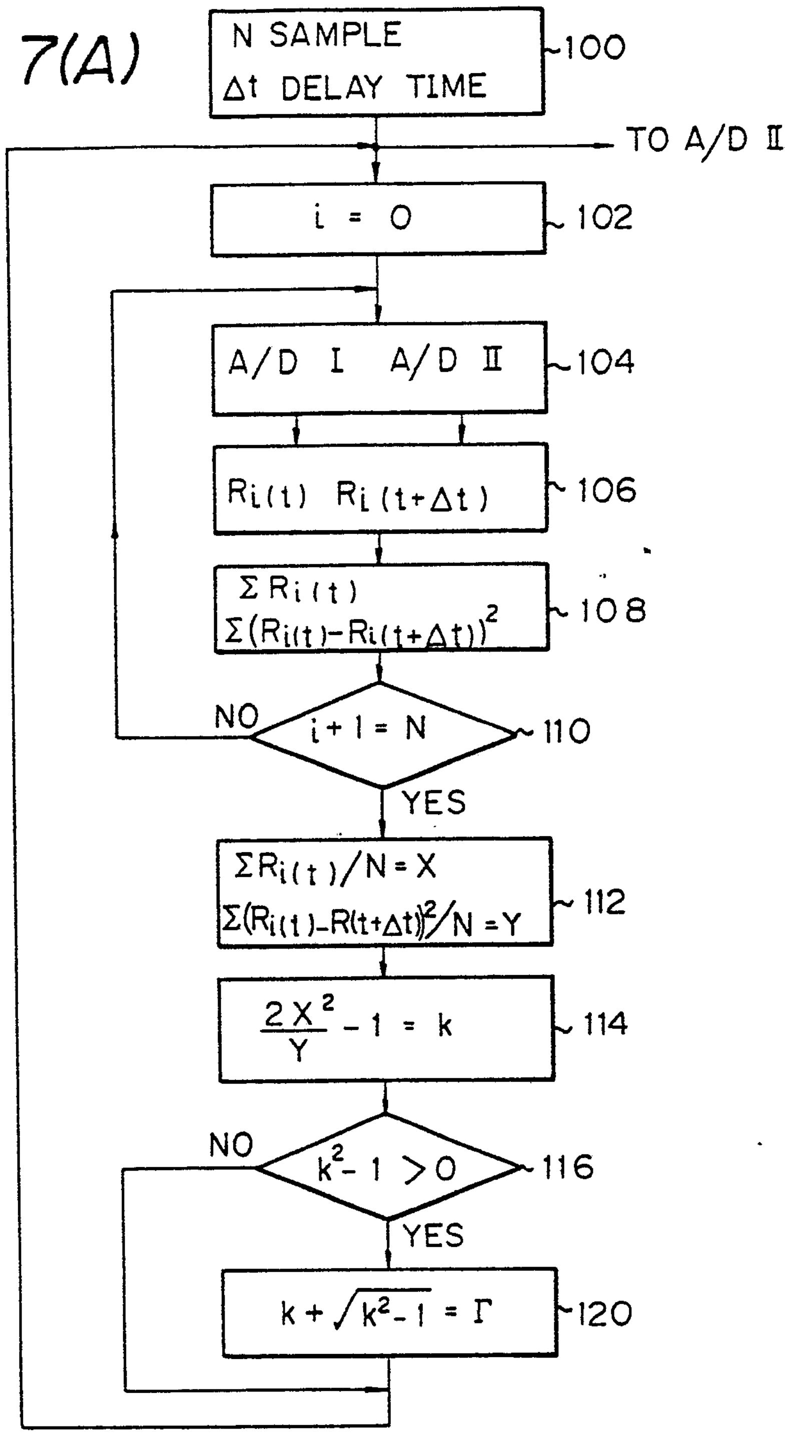
N SAMPLE
Δt DELAY TIME
100
TO A/D II
i = 0
102
A/D I A/D II
104
Ri(t) Ri(t+Δt)
106
ΣRi(t)
Σ(Ri(t)-Ri(t+Δt))²
108
NO
i+1 = N
110
YES
ΣRi(t)/N = X
Σ(Ri(t)-R(t+Δt))²/N = Y
112
2X²/Y - 1 = k
114
NO
k² - 1 > 0
116
YES
k + √(k²-1) = Γ
120

Fig. 7(B)

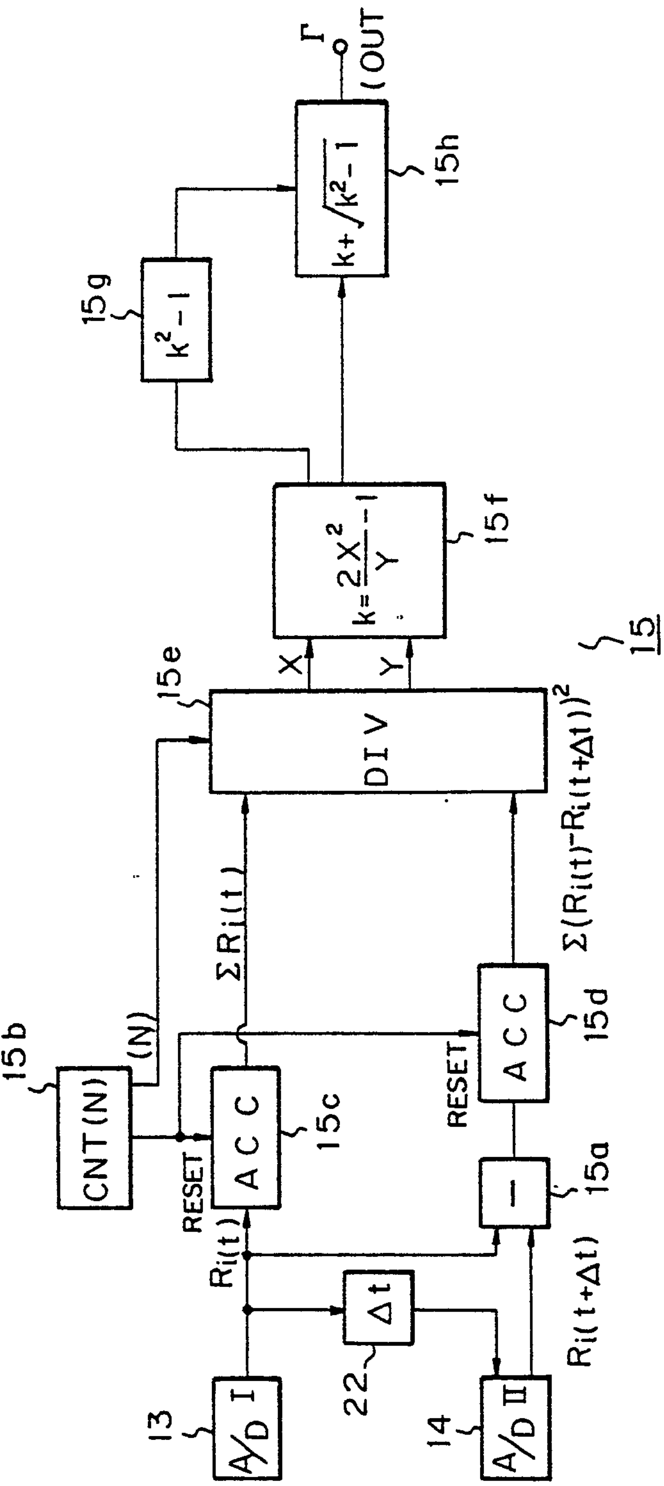

13
A/D I
22
Δt
14
A/D II
Ri(t)
Ri(t+Δt)
15a
RESET
ACC
15c
15d
15b
CNT(N)
(N)
ΣRi(t)
Σ(Ri(t)-Ri(t+Δt))²
15e
DIV
X
Y
15f
15g
15h
(OUT)
Γ
15

Fig. 8

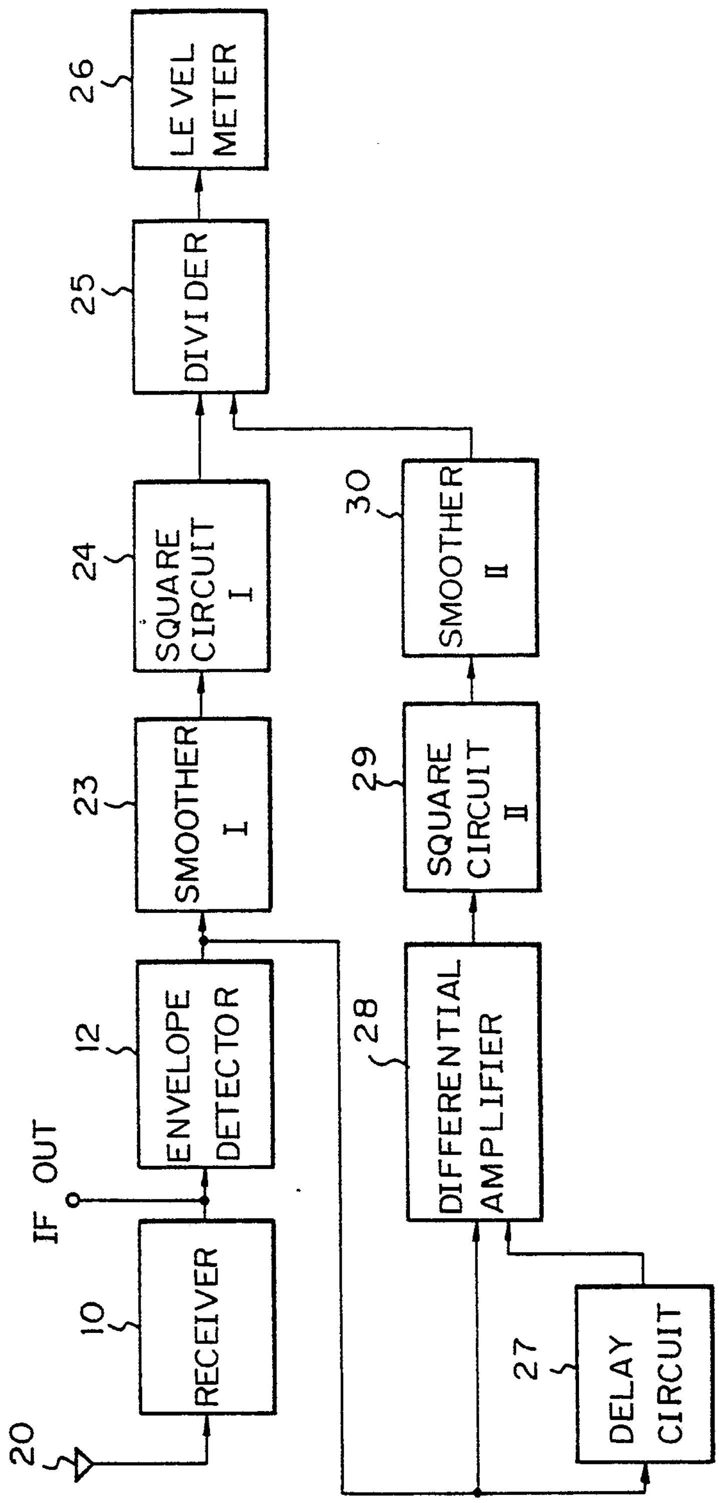
20
10
RECEIVER
IF OUT
12
ENVELOPE DETECTOR
23
SMOOTHER I
24
SQUARE CIRCUIT I
25
DIVIDER
26
LEVEL METER
27
DELAY CIRCUIT
28
DIFFERENTIAL AMPLIFIER
29
SQUARE CIRCUIT II
30
SMOOTHER II

Fig. 9

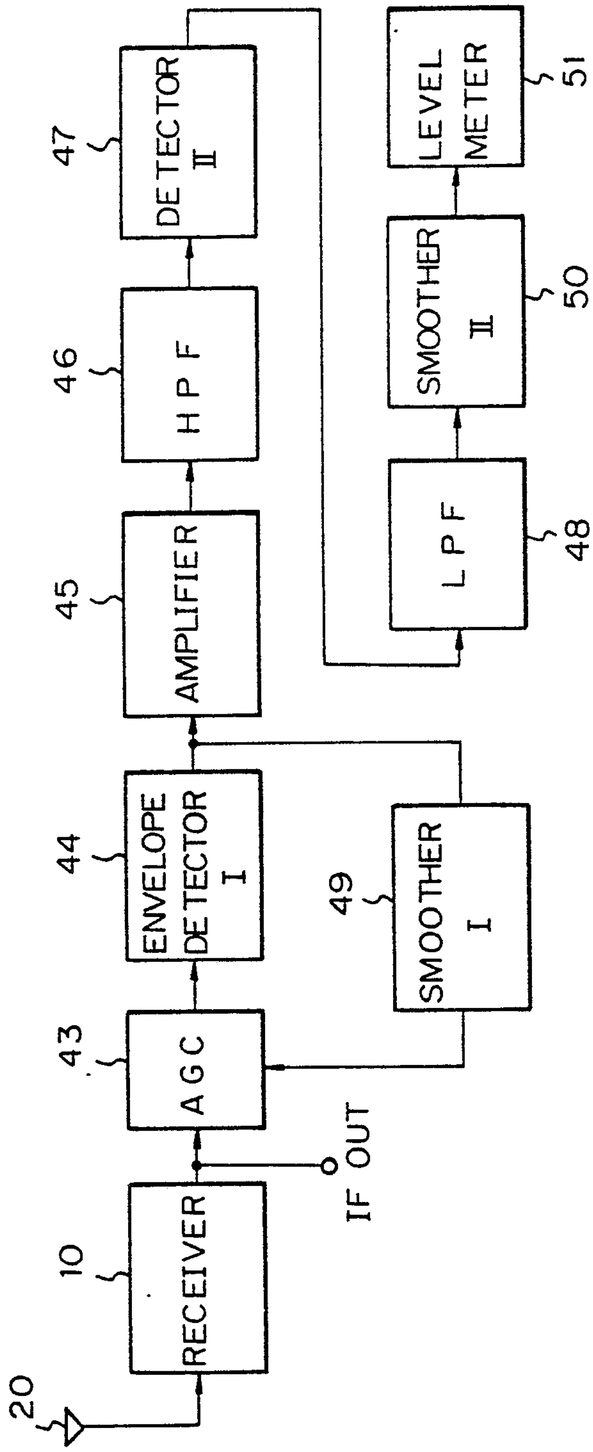
20
10
RECEIVER
IF OUT
43
AGC
44
ENVELOPE DETECTOR I
45
AMPLIFIER
46
HPF
47
DETECTOR II
49
SMOOTHER I
48
LPF
50
SMOOTHER II
51
LEVEL METER

Fig. 10

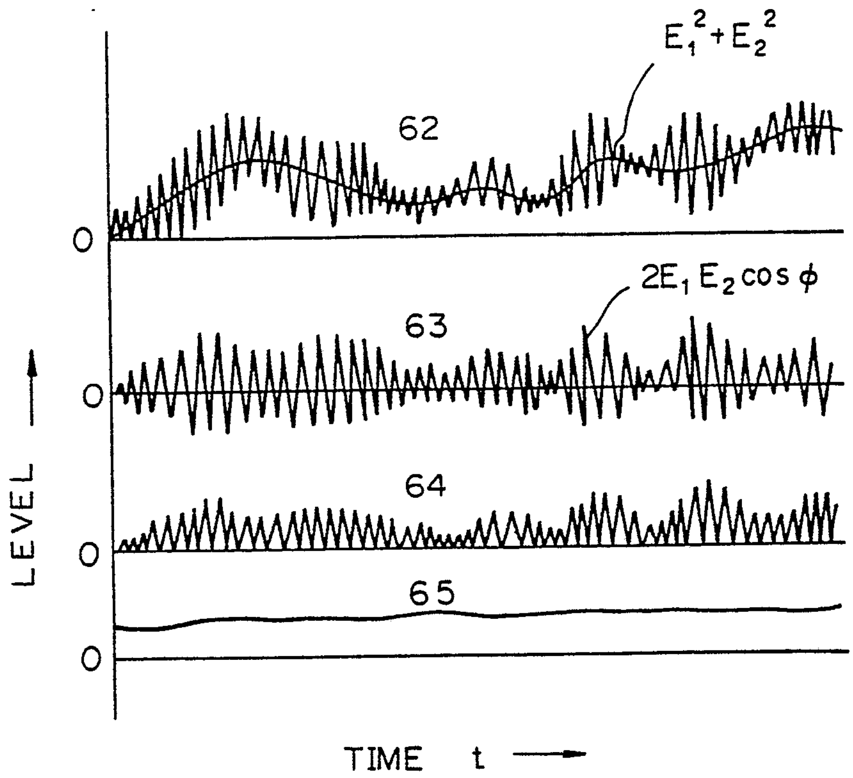

Fig. 11

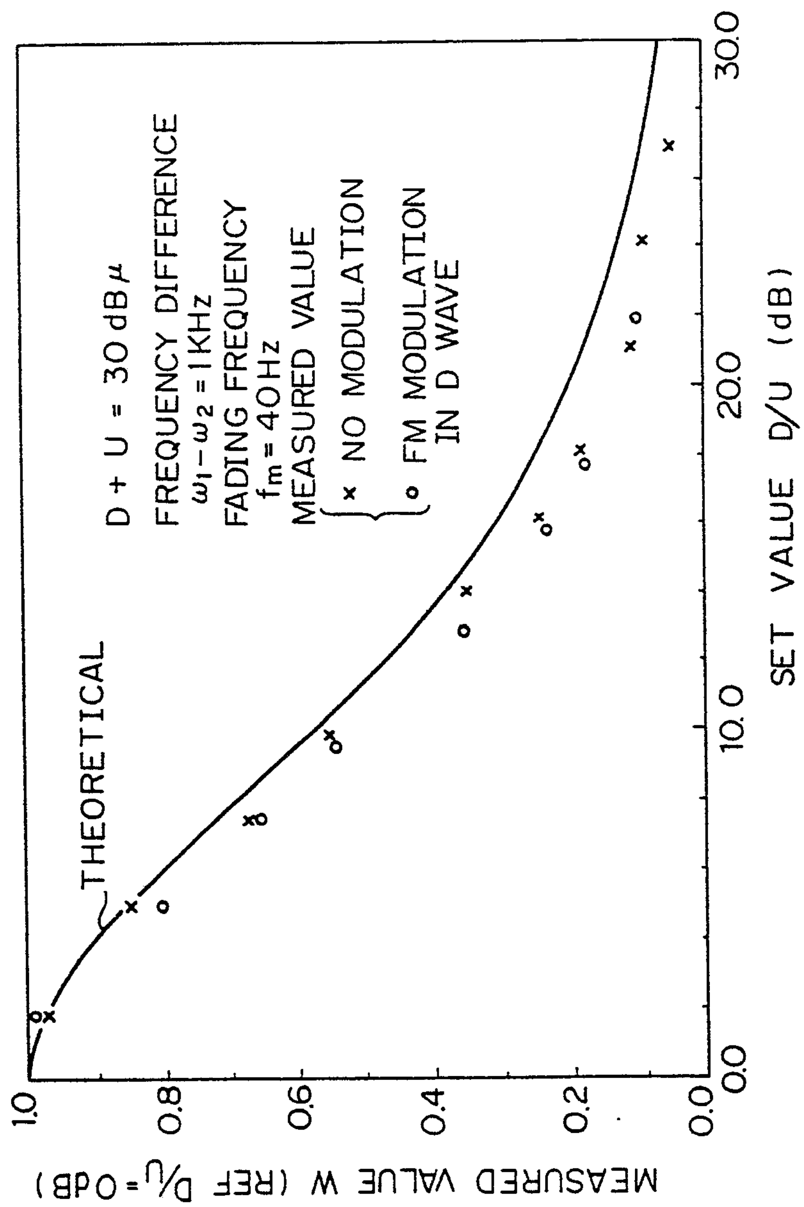
THEORETICAL
D + U = 30 dBμ
FREQUENCY DIFFERENCE
ω1 - ω2 = 1 KHz
FADING FREQUENCY
fm = 40 Hz
MEASURED VALUE
× NO MODULATION
o FM MODULATION IN D WAVE
1.0
0.8
0.6
0.4
0.2
0.0
0.0
10.0
20.0
30.0
SET VALUE D/U (dB)
MEASURED VALUE W (REF D/U = 0dB)